Europäisches Patentamt

(19) European Patent Office

Office européen des brevets

(11) Numéro de publication: **0 102 282**
**B1**

(12) **FASCICULE DE BREVET EUROPEEN**

(45) Date de publication du fascicule du brevet:
**01.04.87**

(51) Int. Cl.⁴: **G 01 N 21/31**, G 01 J 3/08

(21) Numéro de dépôt: **83401604.0**

(22) Date de dépôt: **02.08.83**

(54) Procédé et dispositif de dosage de faible teneur de composants gazeux.

(30) Priorité: **03.08.82 FR 8213551**

(43) Date de publication de la demande:
**07.03.84 Bulletin 84/10**

(45) Mention de la délivrance du brevet:
**01.04.87 Bulletin 87/14**

(84) Etats contractants désignés:
**CH DE GB IT LI NL**

(56) Documents cités:
**DE - B - 1 572 900**
**FR - A - 2 181 203**
**US - A - 3 137 757**
**US - A - 3 488 491**

**"Laboratory methods in infrared spectroscopy",
chapitre 6, pages 71-83, ed. R.G.J. Miller et al., Heyden
& Son Ltd., London, GB; J.C. Wright: "Industrial-plant
analysis"**

(73) Titulaire: **Office National d'Etudes et de Recherches
Aerospatiales (O.N.E.R.A.), 29 Avenue de la Division
Leclerc, F-92320 Châtillon-sous-Bagneux (FR)**

(72) Inventeur: **Gramont, Louis, 142, Route de Versailles,
F-91160 Champlan (FR)**

(74) Mandataire: **Fort, Jacques et al, CABINET
PLASSERAUD 84, rue d'Amsterdam, F-75009 Paris (FR)**

## Description

La présente invention concerne le dosage d'un composant présent à faible teneur dans un mélange gazeux par absorption d'un rayonnement caractéristique de ce composant. Le terme «gazeux» doit être interprété de façon large comme désignant tout aussi bien une vapeur ou une dispersion qu'un gaz proprement dit.

On connaît déjà de nombreux procédés de dosage d'un composant présent à faible teneur dans un mélange gazeux. On connaît en particulier des procédés suivant lesquels on fait passer un faisceau de rayonnement ayant traversé le mélange et dont la composition spectrale contient au moins une raie d'absorption caractéristique du composant alternativement suivant deux voies dont l'une comporte une quantité déterminée du mélange gazeux et dont l'autre sert de référence.

La présente invention vise à fournir un procédé et un dispositif de dosage du genre ci-dessus défini répondant mieux que les systèmes antérieurs aux exigences de la pratique, notamment par l'association d'une constitution simple et d'une sensibilité satisfaisante. L'invention vise également à apporter une solution simple au problème de la sélectivité de la mesure dans le cas où des raies d'absorption appartenant à des gaz parasites se superposent à celles du composant gazeux dont la teneur est à déterminer. Enfin, dans un mode particulier d'exécution, l'invention vise à écarter l'incidence d'une polarisation éventuelle du faisceau qui traverse le mélange.

Dans ce but, l'invention propose notamment un procédé du genre ci-dessus défini, caractérisé en ce que la seconde voie parcourue par le faisceau de rayonnement se limite à un diaphragme présentant une transmission du rayonnement sensiblement égale à celle de la première voie en l'absence dudit composant dans le mélange et en ce qu'on dirige le faisceau de sortie provenant des deux voies vers un détecteur de variations d'intensité du faisceau, à travers un filtre de sélection dudit rayonnement caractéristique.

L'invention propose également un dispositif de dosage d'un composant à faible teneur dans un mélange gazeux, comprenant des moyens pour diriger alternativement un faisceau de rayonnement contenant le rayonnement caractéristique du composant, suivant une première voie qui comprend un volume dudit composant, et une seconde voie comportant un diaphragme calibré de façon à avoir une transmission sensiblement égale à celle de la première voie lorsque le mélange ne contient pas ledit composant, ainsi que des moyens pour diriger les faisceaux provenant des deux voies, à travers un filtre transmettant une fraction déterminée de la bande spectrale d'absorption du composant à détecter, vers un détecteur associé à des moyens de mesure des variations du signal de sortie du détecteur.

Pour augmenter la sélectivité, lorsque le mélange est susceptible de contenir une faible teneur de gaz parasite, on peut interposer, sur le trajet optique commun aux deux voies, une quantité déterminée de gaz parasite, supérieure à celle susceptible d'être traversée par le faisceau de la seconde voie.

Le faisceau de rayonnement incident peut être constitué par la lumière naturelle. On utilisera plus souvent une source de lumière adaptée au domaine spectral du rayonnement caractéristique, qui pourra suivant le cas se trouver dans l'ultraviolet, le visible ou l'infrarouge (ce dernier cas excluant l'emploi de la lumière naturelle). Dans le cas de mesure de la concentration de gaz dans l'atmosphère, on pourra regrouper ensemble les éléments définis ci-dessus dans un même appareil, mais l'émission de la source à travers la zone atmosphérique où s'effectue la mesure est alors renvoyée par un réflecteur directif placé à distance, par exemple par un catadioptre qui fait disparaître les problèmes de pointage du réflecteur.

L'invention sera mieux comprise à la lecture de la description qui suit de modes particuliers de réalisation donnés à titre d'exemples non limitatifs. La description se réfère aux dessins qui l'accompagnent, dans lesquels:

Les figures 1A et 1B sont des courbes représentatives de la variation de la transmission $\tau$ d'un mélange en fonction de la teneur u (exprimée en pression partielle) en $NO_2$ et en $C_2H_4$ respectivement, pour des rayonnements à 450 nm et à 3,3 µm.

La figure 2 est un schéma simplifié d'un dispositif suivant un premier mode d'exécution de l'invention, utilisant un volet rotatif pour orienter alternativement le faisceau vers deux voies de transmission.

La figure 3, similaire à la figure 2, montre une variante de réalisation de l'invention, utilisant une ouverture annulaire entourant la cuve.

La figure 4 montre schématiquement une constitution possible des moyens d'orientation de faisceau du dispositif de la figure 3.

Les figures 5A et 5B montrent, respectivement en vue de face et en vue de côté, une variante des moyens d'orientation du faisceau de la figure 3.

La figure 6 montre une disposition possible du dispositif pour détecter et doser un gaz dans l'atmosphère.

Dans son principe, le procédé suivant l'invention utilise la modulation du signal fourni par un détecteur électro-optique qui reçoit un faisceau lumineux ayant traversé le mélange contenant un composant à doser, alternativement suivant deux voies.

Sur l'une des voies le faisceau, qui a déjà subi un affaiblissement $\tau(u_1)$ à la traversée du mélange, traverse un diaphragme qui limite la section du faisceau, ce qui se traduit par un coefficient de transmission k. Sur l'autre voie, le même faisceau traverse une cuve contenant une quantité bien déterminée du gaz à doser, éventuellement mélangé à un autre gaz ne présentant pas de bande d'absorption recouvrant celle du composant gazeux à détecter. Cette cuve présente un coefficient de transmission $\tau(u_2)$ fonction de la quantité $u_2$ de gaz qu'elle contient.

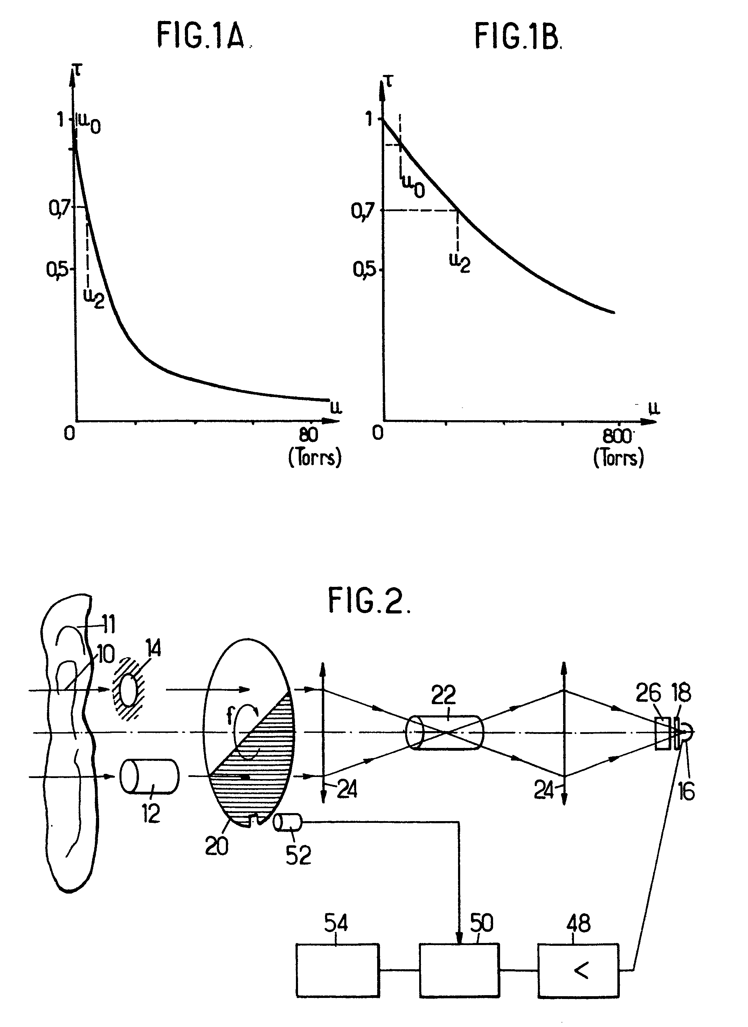

La courbe représentative de la transmission $\tau$ en fonction de la quantité de composant à doser traversée par le faisceau a l'allure représentée en figure 1A ou 1B. Sur ces courbes, la quantité de composé gazeux absorbant le rayonnement est indiquée par sa pression (éventuellement sa pression partielle) dans la cuve, de volume déterminé.

Les faisceaux sortant du diaphragme et de la cuve sont alternativement amenés au détecteur, précédés d'un filtre centré sur la bande d'absorption du composant gazeux à doser. La composition spectrale du faisceau qui traverse le mélange à doser, puis parcourt l'une ou l'autre des deux voies vers le détecteur, est choisie en fonction de la bande spectrale d'absorption.

On s'arrangera pour que la transmission par le diaphragme calibré dans le domaine spectral délimité par le filtre soit la même que celle de la cuve, de façon que l'on ait, à l'équilibre:

$$k = \tau\,(u_2).$$

Dans ce cas, on voit apparaître une modulation du signal lorsqu'une quantité de gaz $(u_1)$ se trouve dans le trajet optique en amont des deux voies. L'amplitude de cette modulation est proportionnelle à la quantité de gaz traversée et elle dépend de plus de la dérivée $d\tau/du$ mesurée pour les valeurs $u_0$ et $u_2$. Sur les figures 1A et 1B, $u_2$ a été choisie pour correspondre à un coefficient de transmission de 70%.

Le taux de modulation obtenu sera de:

$$\left(\frac{d\tau}{du}\right)_{u_o} = k - \left(\frac{d\tau}{du}\right)_{u_2} \qquad (1)$$

Dans cette formule, $(d\tau/du)u_0$ désigne la pente de la courbe de variation à l'origine, c'est-à-dire pour un coefficient de transmission égal à 1. Comme il n'est dans la pratique pas possible de mesurer la pente en ce point, on la mesure à proximité. Par exemple, sur les figures 1A et 1B, la mesure de la pente est effectuée pour une valeur de $u_0$ qui correspond à un coefficient de transmission compris entre 0,9 et 1.

Pour mettre en oeuvre le procédé, on peut utiliser le dispositif montré en figure 2. Ce dispositif comporte avantageusement une source artificielle de rayonnement non représentée. Le faisceau incident 10, constitué par la lumière provenant de la source, traverse la zone 11 dans laquelle se trouve le composant à doser. Le dispositif comprend deux voies parallèles. La première est constituée par une cuve étanche 12 de forme tubulaire, fermée par des hublots transparents au rayonnement utilisé pour la mesure. La cuve 12 contient une quantité du composant gazeux à détecter en 11 choisi de façon que son coefficient de transmission soit compris entre 0,5 et 0,7. La longueur de la cuve dépendra naturellement de l'intensité moyenne de l'absorption et on pourra amener la pression dans la cuve à une valeur proche de la pression atmosphérique par adjonction d'un gaz n'ayant pas de bande d'absorption présentant un recouvrement avec la bande dans laquelle s'effectue la mesure, par exemple par de l'azote sec.

L'autre voie est constituée par un diaphragme circulaire 14, de coefficient de transmission k, dont l'axe est parallèle à celui de la cuve.

Des moyens placés en amont ou en aval de la cuve 12 et du diaphragme 14 permettent à un détecteur 16 de recevoir alternativement, à travers un filtre 18, la lumière ayant suivi l'une ou l'autre des deux voies. Ces moyens sont constitués par un modulateur optique 20 en demi-lune, animé d'un mouvement de rotation à vitesse constante autour de son axe, comme indiqué par la flèche f. Lorsqu'il tourne, ce modulateur obture alternativement les deux voies et laisse passer le rayonnement incident progressivement d'une voie à l'autre.

Le dispositif montré en figure 2 comporte de plus une cuve 22 et un système optique (lentilles 24 ou miroirs) faisant passer la totalité de la lumière provenant de l'une et l'autre des voies à travers la cuve. Celle-ci est destinée à recevoir une quantité bien déterminée des gaz parasites susceptibles de se trouver dans la zone 11 en même temps que le gaz dont la teneur est à mesurer. Cette cuve, apportant une absorption identique sur les deux voies, augmente considérablement la sélectivité de la mesure en limitant les effets d'une variation de la teneur en gaz parasites dans la zone 11.

Le dispositif peut comporter également un système d'étalonnage constitué par un barillet portant plusieurs petites cuves 26, à proximité du détecteur 16. Par rotation du barillet, on peut amener successivement ces cuves, qui contiennent des quantités connues et différentes du gaz à détecter et à doser, sur le parcours optique commun, et étalonner ainsi le dispositif. L'une des cuves est vide pour permettre de faire le zéro en compensant les pertes dues à l'absorption par les hublots. Un volet ajustable de faible dimension permet d'égaliser exactement les valeurs des transmissions par les deux voies.

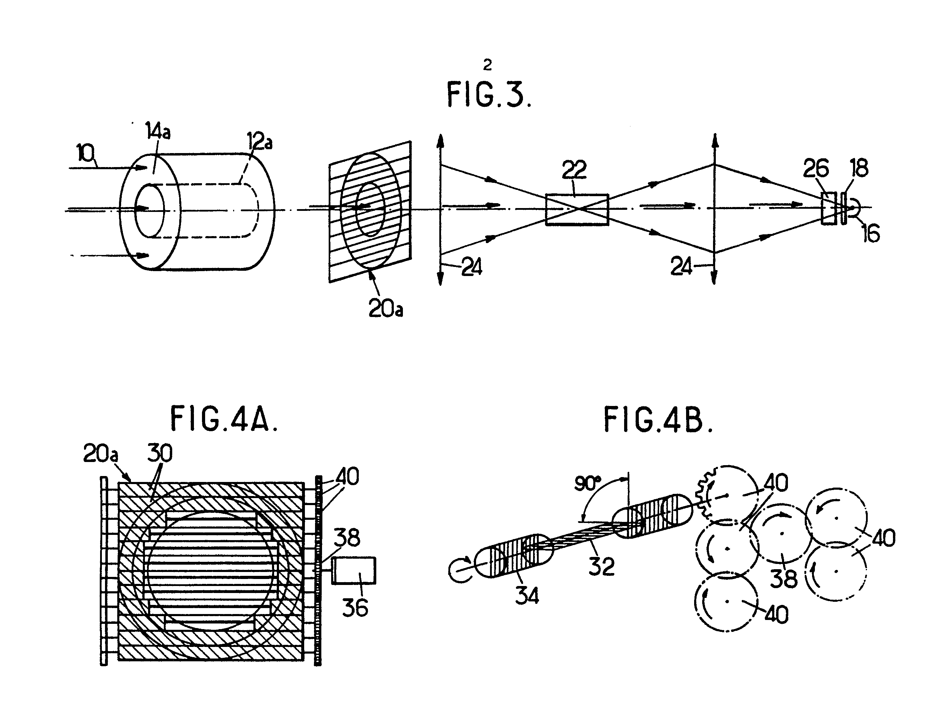

Le dispositif de la figure 2 présente l'inconvénient d'être sensible à la polarisation éventuelle de la lumière, lorsque celle-ci provient du ciel. On peut atténuer sensiblement ce défaut en interposant sur les deux voies, avant la lentille 24 d'entrée, une lame dépolarisante, transparente dans le domaine spectral utilisé. Mais cet inconvénient est écarté dans le mode de réalisation montré en figure 3 où le diaphragme 14a est constitué par une ouverture annulaire, délimitée par un tube concentrique à la cuve. Ce tube peut également être utilisé comme pare-soleil en le prolongeant vers l'extérieur. On retrouve sur la figure 3 les autres éléments de la figure 2.

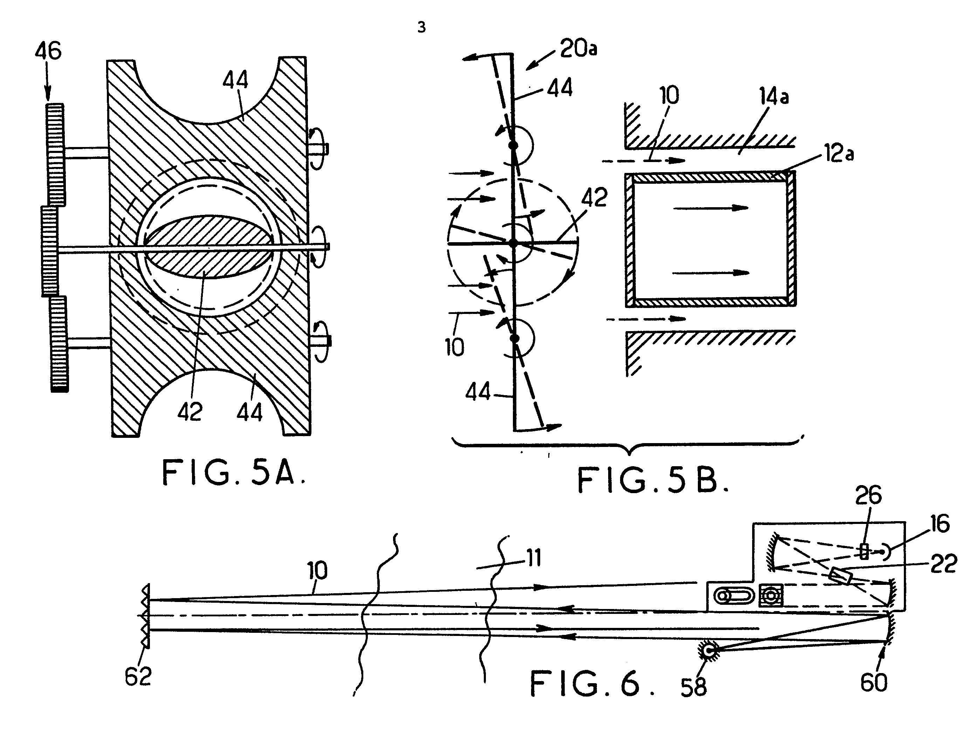

Dans le cas de la figure 3, on ne peut plus utiliser un modulateur optique en demi-lune du genre montré en figure 2. Les figures 4 et 5 montrent deux variantes adaptables au cas d'un diaphragme annulaire.

Le modulateur 20a montré en figures 4A et 4B comporte un rideau de lamelles 30 tournant autour d'axes parallèles. Les deux premières et dernières lamelles (dans le sens vertical) sont entièrement situées sur la première voie. Elles sont en conséquence en un seul tronçon. Au contraire, les lamelles intermédiaires, par exemple les quatre lames médianes dont une est montrée en figure 4B, présentent un tronçon central 32 et deux tronçons latéraux 34, à 90° du tronçon 32 de façon que le faisceau dirigé vers la cuve soit totalement arrêté lorsque le faisceau qui traverse le diaphragme est libre, et inversement. On voit que le rayonnement arrive alternativement à travers la cuve et à travers le diaphragme. On peut utiliser tout moyen approprié pour entraîner en synchronisme toutes les lamelles. Par exemple, un moteur 36 peut être accouplé à un pignon central 38 qui commande deux trains de pignons 40 associés chacun à une lamelle.

Une solution plus simple que celle des figures 4A et 4B, mais en contrepartie plus encombrante, est montrée en figure 5. Sur cette figure, où les organes correspondant à ceux déjà montrés en figure 3 portent le même numéro de référence, les moyens pour orienter alternativement le rayonnement à travers la cuve 12a et à travers le diaphragme 14a sont constitués par un disque central 42 tournant autour d'un axe perpendiculaire à celui de la cuve, et deux plaques externes 44 tournant autour d'axes parallèles au précédent. Le disque central opaque présente une surface égale à la surface utile du hublot d'entrée de la cuve 12a. Il est entraîné en rotation à vitesse constante par un moteur non représenté. Les deux plaques externes 44 sont synchronisées en rotation avec le disque central 42, par exemple par un train d'engrenages 46, et se trouvent dans le même plan lorsque le disque 42 présente sa tranche au rayonnement incident. Les plaques 44 sont découpées de façon à interrompre totalement le passage d'un faisceau à travers le diaphragme 14a et à libérer totalement le passage du rayonnement vers la cuve 12a lorsqu'elles sont dans le même plan, comme indiqué sur la figure 5B.

Le dispositif est complété par un circuit de mesure de la modulation de signal de sortie du détecteur 16. Ce circuit peut être similaire à celui décrit dans le brevet FR-A-2 181 203; un tel circuit est montré schématiquement en figure 2. Il comporte un amplificateur 48 présentant un bande bassante compatible avec la fréquence fixée par les moyens d'orientation alternative du rayonnement (disque modulateur sur la figure 2). L'amplificateur 48 attaque un détecteur synchrone 50 qui reçoit un signal de référence, par exemple à partir d'un capteur 52 associé au disque 20. Ce signal de sortie du détecteur 50 peut être affiché ou fourni à un enregistreur 54, par exemple sur bande de papier.

Comme on l'a déjà indiqué plus haut, la source de rayonnement est choisie en fonction de la nature du gaz à mesurer. Il est commode d'utiliser le ciel lorsque les mesures peuvent être effectuées en ultra-violet ou dans le visible et sont prévues uniquement de jour. L'effet de la polarisation et de l'absorption par les nuages, les fumées et les variations d'indice peut être fortement atténué en utilisant la disposition concentrique montrée en figure 3.

Lorsque par contre on souhaite travailler dans l'infrarouge ou de nuit, il est nécessaire d'utiliser une source de lumière artificielle. En infrarouge proche, vers 3 microns environ, et dans le visible, on peut en particulier utiliser une lampe à filament de tungstène placée au foyer d'un collimateur. Dans ce cas, il est commode de regrouper la source et l'appareil de mesure proprement dit en un même ensemble et de placer, au-delà de la zone où se trouve le composant à détecter, un dispositif réfléchissant. On arrive ainsi à la disposition montrée schématiquement en figure 6. Le dispositif réfléchissant sera avantageusement un catadioptre pour faire disparaître le problème d'orientation du dispositif et de la stabilité en cas de vibration.

Dans le montage montré en figure 6, la source 58 est associée à un miroir collimateur 60 qui fournit un faisceau parallèle, renvoyé par des trièdres réfléchissants 62 à une distance qui peut être de plusieurs centaines de mètres. Le flux de rayonnement 10, qui traverse deux fois la zone à étudier 11 (ce qui augmente la sensibilité) est repris par les moyens destinés à orienter alternativement le rayonnement vers l'une ou l'autre des deux voies, puis par un système optique, par exemple catadioptrique, de concentration sur le détecteur 16.

Le dispositif ainsi réalisé permet d'obtenir une sensibilité élevée, supérieure à celle du dispositif décrit dans le brevet antérieur déjà mentionné, tout en conservant une sélectivité élevée, notamment lorsqu'on place sur le trajet commun des faisceaux une cuve contenant une quantité déterminée des gaz parasites éventuels.

## Revendications

1. Procédé de dosage d'un composant présent à faible teneur dans un mélange gazeux par absorption d'un rayonnement caractéristique de ce composant, suivant lequel on fait passer un faisceau de rayonnement (10) ayant traversé ledit mélange et dont la composition spectrale contient au moins une raie caractéristique du composant alternativement suivant deux voies dont l'une comporte une quantité déterminée du composant gazeux et dont l'autre sert de référence, caractérisé en ce que la seconde voie parcourue par le faisceau de rayonnement se limite à un diaphragme (14) présentant une transmission des rayonnements sensiblement égale à celle de la première voie en l'absence dudit composant dans le mélange et en ce qu'on dirige le faisceau de sortie provenant des deux voies vers un détecteur de variation d'intensité du faisceau à travers un filtre (18) de sélection dudit rayonnement caractéristique.

2. Procédé suivant la revendication 1, caractérisé en ce que, pour augmenter la sélectivité, on interpose sur le trajet optique commun aux deux voies une cuve (22) contenant une quantité déterminée de gaz parasite, supérieure à celle susceptible d'être traversée par le faisceau dans le mélange.

3. Procédé suivant la revendication 1 ou 2, caractérisé en ce que le faisceau de rayonnement incident est constitué par la lumière naturelle.

4. Procédé suivant la revendication 1, 2 ou 3, caractérisé en ce que la quantité dudit composant traversée par le faisceau sur la première voie est choisie pour présenter un coefficient de transmission compris entre 50 et 70%.

5. Dispositif de dosage d'un composant présent à faible teneur dans un mélange gazeux, comprenant des moyens pour diriger alternativement un faisceau (10) de rayonnement contenant un rayonnement caractéristique du composant et ayant traversé ledit mélange (11) alternativement suivant une première voie qui comprend une quantité déterminée dudit composant et suivant une seconde voie, caractérisé en ce que la seconde voie comporte un diaphragme (14) calibré de façon à avoir une transmission sensiblement égale à celle de la première voie lorsque le mélange ne contient pas ledit composant et en ce que des moyens sont prévus pour diriger le faisceau provenant des deux voies à travers un filtre (18) transmettant au moins une fraction déterminée de la bande spectrale d'absorption du composant à détecter, vers un détecteur (16) associé à des moyens (48, 50, 54) de mesure de l'amplitude des variations du signal de sortie du détecteur.

6. Dispositif suivant la revendication 5, caractérisé en ce que les deux voies sont parallèles et en ce que les moyens pour diriger le faisceau sont constitués par un modulateur rotatif (20) qui interrompt alternativement la transmission du rayonnement qui traverse le diaphragme (14) et celle du rayonnement qui traverse une cuve (12) contenant la quantité déterminée dudit composant.

7. Dispositif suivant la revendication 5, caractérisé en ce que le diaphragme délimite une ouverture annulaire (14a) concentrique à une cuve (12a) contenant la quantité déterminée dudit composant.

8. Dispositif suivant la revendication 7, caractérisé en ce que les moyens pour diriger le faisceau comportent un rideau de lamelles (30) tournant en synchronisme autour d'axes parallèles, ledit rideau ayant une partie centrale constituée par des tronçons centraux (32) d'une partie des lamelles, tronçons perpendiculaires au reste des lamelles.

9. Dispositif suivant la revendication 7, caractérisé en ce que les moyens pour diriger le faisceau comprennent un disque central (42) d'interruption de la voie comportant la cuve (12a), rotatif autour d'un axe transversal au faisceau, et deux plaques externes (44) d'interruption de la voie comportant le diaphragme, tournant en synchronisme avec le disque autour d'axes parallèles à celui du disque (42) avec un décalage de 90°.

10. Dispositif suivant l'une quelconque des revendications 5 à 9, caractérisé en ce qu'il comprend, sur une partie commune du faisceau, une cuve (22) contenant une quantité déterminée des gaz parasites absorbants susceptibles d'être rencontrés dans le mélange.

**Claims**

1. A process for determining the quantity of a component present in a small amount in a gaseous mixture by absorption of a characteristic radiation of the component, wherein a radiation beam (10) having passed through the mixture and whose spectral composition contains at least one spectral line characteristic of the component is passed alternately along two channels one of which comprises a predetermined amount of the gaseous component and the other of which serves as a reference, characterized in that the second channel over which the radiation beam travels is limited to a diaphragm (14) having a radiation transmission substantially equal to that of the first channel in the absence of said component in the mixture and in that the output beam from the two channels is directed to a detector detecting the amount of intensity variation of the beam through a filter (26) selecting said characteristic radiation.

2. Process according to claim 1, characterized in that, so as to increase selectivity, a tank (22) containing a predetermined amount of stay gas, greater than that likely to be traversed by the beam in the mixture, is placed in the optical path common to both channels.

3. Process according to claim 1 or 2, characterized in that the incident radiation beam consists of natural light.

4. Process according to claim 1, 2 or 3, characterized in that the amount of said component through which the beam passes in the first channel is so selected as to have a transmission coefficient of from 50 to 70%.

5. A device for determining the quantity of a component present in a small amount in a gas mixture, comprising means for alternately directing a radiation beam (10) containing a radiation characteristic of the component and having passed through the mixture (11) alternately along a first channel which comprises a predetermined amount of sid component and along a second channel, characterized in that the second channel comprises a diaphragm (14) calibrated so as to have a transmission substantially equal to that of the first channel when the mixture does not contain said component and in that means are provided for directing the beam from both channels through a filter (26) transmitting at least a given fraction of the spectral absorption band of the component to be detected, to a detector (16) associated with means (48, 50, 54) for measuring the amount of the variation of the output signal of the detector.

6. Device according to claim 5, characterized in that the two channels are parallel and in that the means for directing the beam are formed by a rotary modulator (20) which alternately interrupts the transmission of the radiation which passes through the diaphragm (14) and that of the radiation which passes through a tank (12) containing the predetermined amount of said component.

7. Device according to claim 5, characterized in that the diaphragm defines an annular opening (14a) concentric with a tank (12a) containing the definite amount of said component.

8. Device according to claim 7, characterized in that the means for directing the beam comprise a curtain of blades (30) rotating in mutual synchronism about parallel axes, said curtain having a central part formed by central sections (32) of some of the blades, which sections are perpendicular to the balance of the blades.

9. Device according to claim 7, characterized in that the means for directing the beam comprise a central disk (42) for interrupting the channel comprising the tank (12a) which rotates about an axis transversal to the beam and two external plates (44) for interrupting the channel comprising the diaphragm, rotating in synchronism with the disk about axes parallel to that of the disk (42) with a 90° offset.

10. Device according to any one of claims 5 to 9, characterized in that it comprises, on a common part of the beam, a tank (22) containing a predetermined amount of those absorbing parasite gases which are likely to be present in the mixture.

**Patentansprüche**

1. Verfahren zur Bestimmung einer in schwacher Konzentration in einem Gasgemisch enthaltenen Komponente durch Absorption einer für diese Komponente charakteristischen Strahlung, wobei man ein Strahlenbündel (10), das durch dieses Gemisch hindurchgegangen ist und dessen Spektralzusammensetzung wenigstens eine für diese Komponente charakteristische Strahlung enthält, abwechselnd über zwei Wege gehen lässt, deren einer eine bestimmte Menge der Gaskomponente aufweist, und deren anderer als Referenz dient, dadurch gekennzeichnet, dass der zweite vom Strahlenbündel durchlaufene Weg sich auf ein Diaphragma (14) beschränkt, welches eine Strahlendurchlässigkeit besitzt, die im wesentlichen gleich der des ersten Weges ohne Vorhandensein der Komponente im Gasgemisch ist, und dass das Ausgangsstrahlenbündel, das von den beiden Wegen kommt, über einen Filter (18) zum Ausfiltern dieser charakteristischen Strahlung einem Detektor zur Ermittlung der Intensitätsveränderung dieses Strahlenbündels zugeleitet wird.

2. Verfahren nach Anspruch 1, dadurch gekennzeichnet, dass zur Erhöhung der Selektivität auf der beiden Strahlungswegen gemeinsamen optischen Bahn eine Küvette (22) mit einer bestimmten Menge von Nebengasen angeordnet wird, welche Menge grösser ist als jene, welche in der Gasmischung von dem Strahlenbündel durchdrungen werden kann.

3. Verfahren nach einem der Ansprüche 1 oder 2, dadurch gekennzeichnet, dass das verwendete Strahlenbündel durch natürliches Licht gebildet ist.

4. Verfahren nach einem der Ansprüche 1, 2 oder 3, dadurch gekennzeichnet, dass die vom Strahlenbündel auf seinem ersten Weg durchdrungene Menge der Komponente so ausgewählt ist, dass sie einen Durchlässigkeitskoeffizienten zwischen 50% und 70% aufweist.

5. Einrichtung zum Bestimmen einer in schwacher Konzentration in einem Gasgemisch enthaltenen Komponente, umfassend Mittel zum Lenken eines Strahlenbündels (10) mit einer für die Komponente charakteristischen Strahlung nach Durchdringung dieses Gemisches abwechselnd entlang eines ersten Strahlenweges, welcher eine bestimmte Menge der Komponente enthält, sowie entlang eines zweiten Strahlenweges, dadurch gekennzeichnet, dass auf dem zweiten Strahlenweg ein Diaphragma (14) angeordnet ist, welches so kalibriert ist, dass es eine Durchlässigkeit aufweist, die im wesentlichen gleich der des ersten Strahlenweges ist, wenn das Gasgemisch die Komponente nicht enthält, und dass diese Mittel dazu bestimmt sind, das von den beiden Strahlenwegen kommende Strahlenbündel durch einen Filter (18), welcher wenigstens einen bestimmten Anteil des Absorptionsspektralbereichs der zu bestimmenden Komponente hindurchlässt, einem Detektor (16) zuzulenken, welcher Mitteln (48, 50, 54) zum Messen der Amplitude der Veränderungen des Ausgangssignals dieses Detektors zugeordnet ist.

6. Einrichtung nach Anspruch 5, dadurch gekennzeichnet, dass die beiden Strahlenwege parallel verlaufen und dass die Mittel zum Lenken des Strahlenbündels durch einen rotierenden Modulator (20) gebildet sind, welcher abwechselnd den Durchlass der Strahlung, die durch das Diaphragma (14) hindurchgeht, und den Durchlass der Strahlung, die durch eine Küvette (12) mit der bestimmten Menge dieser Komponente hindurchgeht, unterbricht.

7. Einrichtung nach Anspruch 5, dadurch gekennzeichnet, dass das Diaphragma eine Ringöffnung (14a) verschliesst, die konzentrisch zu einer die bestimmte Menge der Komponente enthaltenden Küvette angeordnet ist.

8. Einrichtung nach Anspruch 7, dadurch gekennzeichnet, dass die Mittel zum Lenken des Strahlenbündels einen Lamellenvorhang (30) umfassen, dessen Lamellen sich synchron um parallele Achsen drehen, wobei der Vorhang einen zentralen Bereich aufweist, der durch zentrale Abschnitte (32) eines Teils der Lamellen gebildet ist, welche Abschnitte rechtwinklig zum übrigen Teil der Lamellen stehen.

9. Einrichtung nach Anspruch 7, dadurch gekennzeichnet, dass die Mittel zum Lenken des Strahlenbündels eine zentrale Scheibe (42) zur Unterbrechung des die Küvette (12a) aufweisenden Strahlenweges umfassen, wobei die Scheibe um eine quer zum Strahlenbündel verlaufende Achse drehbar ist, und dass sie zwei externe Platten (44) zur Unterbrechung des das Diaphragma aufweisenden Strahlenweges umfassen, die synchron mit der Scheibe um parallel zur Achse der Scheibe (42) angeordnete Achsen mit einem Winkelversatz von 90° rotieren.

10. Einrichtung nach einem der Ansprüche 5 bis 9, dadurch gekennzeichnet, dass sie auf einem dem Strahlenbündel gemeinsamen Wegteil eine Küvette (22) mit einer bestimmten Menge von absorbierenden Nebengasen umfasst, die auch in dem Gasgemisch angetroffen werden.

# FIG.1A.

# FIG.1B.

# FIG.2.

7

FIG.3.

FIG.4A.

FIG.4B.

0 102 282

FIG. 5A.

FIG. 5B.

FIG. 6.